# EUROPÄISCHE PATENTANMELDUNG

(11) **EP 3 703 251 A1**
(43) Veröffentlichungstag der Anmeldung: **02.09.2020**
(21) Anmeldenummer: 20171129.8
(22) Anmeldetag: 12.11.2014
(51) Int. Cl.: H02S 20/26, F24S 20/66

(54) **GEBÄUDEINTEGRIERBARE PHOTOVOLTAIK-BAUEINHEIT**

(62) Teilanmeldung aus: 14192819.2
(71) Anmelder: DAW SE, 64372 Ober-Ramstadt (DE); Belectric OPV GmbH, 97509 Kolitzheim (DE)
(72) Erfinder: Lohmann, Thomas, 68526 Ladenburg (DE); Loewenstein, Thomas, 64342 Seeheim-Jugenheim (DE); Issa, Hafis Hermann, 70186 Stuttgart (DE); Gassner, Bernhard, 91567 Herrieden (DE)
(74) Vertreter: Metten, Karl-Heinz

(57) **Zusammenfassung**

Die vorliegende Erfindung betrifft eine Gebäudeintegrierbare Photovoltaik-Baueinheit, umfassend a) ein Photovoltaikverbundlagensystem, umfassend mindestens ein Dünnschicht-Photovoltaikelement, b) eine erste Kopplungslage, c) eine Anbindungs- und Kompensationsschicht mit einer ersten, der ersten Kopplungslage zugewandten Seite und einer gegenüberliegenden zweiten Seite, eingerichtet und ausgelegt, um Dehnungen oder Formveränderungen mindestens einer zur ersten Seite benachbarten Schicht und/oder um Dehnungen oder Formveränderungen einer über die zweite Seite verbundenen bzw. verbindbaren Schicht und/oder um relative Lageveränderungen von mindestens einer zur ersten Seite benachbarten Schicht und der über die zweite Seite verbundenen bzw. verbindbaren Schicht zu kompensieren. Ferner betrifft die Erfindung einen Baukörper, umfassend i) mindestens eine Fassadenplatte oder Fassadenbeschichtung, ii) mindestens eine Haft- und Installationsschicht und iii) mindestens eine erfindungsgemäße Photovoltaik-Baueinheit, wobei die Haft- und Installationsschicht die Photovoltaik-Baueinheit über deren Anbindungs- und Kompensationsschicht oder über deren laminiertes Lagensystem mit der Fassadenplatte oder Fassadenbeschichtung verbindet. Außerdem betrifft die Erfindung einen Baukörper, umfassend 1) mindestens eine Fassadenplatte oder Fassadenbeschichtung, 2) mindestens eine Haft- und Installationsschicht und 3) mindestens ein Photovoltaikverbundlagensystem, umfassend mindestens ein Dünnschicht-Photovoltaikelement, wobei die Haft- und Installationsschicht das Photovoltaikverbundlagensystem mit der Fassadenplatte oder Fassadenbeschichtung verbindet. Außerdem betrifft die Erfindung einen Wandaufbau mit einer Fassadenseite, umfassend fassadenseitig mindestens eine erfindungsgemäße Photovoltaik-Baueinheit oder mindestens einen erfindungsgemäßen Baukörper. Schließlich betrifft die Erfindung die Verwendung der erfindungsgemäßen Photovoltaik-Baueinheit oder des erfindungsgemäßen Baukörpers für die Verkleidung von Gebäudefassaden, insbesondere in Kombination mit Wärmedämmverbundsystemen.

## Beschreibung

Die vorliegende Erfindung betrifft eine gebäudeintegrierbare Photovoltaik-Baueinheit, einen Baukörper, umfassend die erfindungsgemäße Photovoltaik-Baueinheit, einen Wandaufbau mit einer Fassadenseite, umfassend fassadenseitig mindestens eine erfindungsgemäße Photovoltaik-Baueinheit oder einen erfindungsgemäßen Baukörper sowie die Verwendung der erfindungsgemäßen Photovoltaik-Baueinheit oder des erfindungsgemäßen Baukörpers für die Verkleidung von Gebäudefassaden.

Photovoltaikanlagen zur Gewinnung elektrischer Energie werden seit langem auf Dächern angebracht. Diesem Umstand liegt die Erkenntnis zu Grunde, dass bei möglichst senkrechtem Einfall der Sonnenstrahlen auf die Solarzelle die Energieausbeute ihr Maximum erreicht. Auf Grund der Weiterentwicklung der Solarzellentechnik lassen sich mittlerweile Solarzellen mit einem sehr hohen Wirkungsgrad auch in der Massenfertigung herstellen, mit denen sich Anwendungsmöglichkeiten erschließen, welche mit Solarzellen älterer Bauart nicht attraktiv genug erschienen. So wird beispielsweise seit einiger Zeit auch die Einbindung der Solartechnik in Gebäudefassaden versucht.

Exemplarisch sei auf die DE 20 2012 105 100 U1 verwiesen, gemäß der ein Photovoltaikmodul über Lüftungskanäle getrennt vor einer Dämmschicht an einer Häuserfassade angebracht werden kann. Hierdurch sollen eine im Sommer unerwünschte Überhitzung des hinter der Fassade liegenden Gebäudes sowie eine zusätzliche energieaufwendige Kühlung vermieden werden. Außerdem soll einer Leistungsverminderung sowie einer Verringerung der Lebensdauer der Photovoltaikmodule vorgebeugt werden.

Die DE 20 2009 017 110 U1 beschreibt eine weiterentwickelte Membrankissenkonstruktion für flexible Photovoltaikelemente. Hierbei sind eine äußere und eine innere Lage in Form flexibler Flächengebilde und flexibler photovoltaischer Elemente vorgesehen, welche auf oder in einem flexiblen Träger eine Mittellage zwischen der äußeren Lage und der inneren Lage bilden. Die Mittellage hat mindestens eine Öffnung aufzuweisen, um einen Druckausgleich zwischen einem von äußerer Lage und Mittellage und einem von innerer Lage und Mittellage gebildeten Raum zu ermöglichen, beispielsweise bei Einwirkung äußerer Kräfte wie Windlasten oder Schneelasten.

Aus der DE 10 2011 102 882 A1 geht eine gebäudeintegrierte Photovoltaikeinheit hervor, die mit drei sogenannten Einkapselungsschichten ausgestattet ist. Auf diese Weise sollen Wasserfestigkeit, physikalische Dauerhaltbarkeit, elektrische Dauerhaltbarkeit und die Fähigkeit zum Standhalten von Temperaturveränderungen verbessert werden.

Zur Anbringung einer gebäudeintegrierten Photovoltaik stellt die CH 705 987 A1 ein Rahmenprofil mit einer Zellnut zur Halterung mindestens einer Photovoltaikzelle zur Verfügung, wobei die Zellnut an einem zu einer Frontseite des Rahmenprofils liegenden Ende auf einer Innenseite des Rahmenprofils vorliegt. Zusätzlich hat das Rahmenprofil an einer Außenseite mindestens eine Dilatationsnut zur Halterung mindestens einer Dichtung aufzuweisen, und die Projektion der Zellnut auf eine der Frontseite gegenüberliegenden Rückseite des Rahmenprofils hat mindestens zu 50% mit einer Projektion der am tiefsten in das Rahmenprofil eindringenden Dilatationsnut auf der Rückseite des Rahmenprofils zu überlappen. Auf diese Weise sollen sich Rahmenkonstruktionen bzw. -profile mit möglichst klein dimensionierten Dilationsnuten erhalten lassen.

Die DE 20 2013 001 918 U1 hat ein System zur Befestigung einer organischen Photovoltaikeinheit an einer Trägerplatte zum Gegenstand, das eine Montageplatte, einen Clip und ein Photovoltaikmodul zu umfassen hat. Mit diesem Befestigungssystem sollen sich Photovoltaikmodule reversibel an Gebäuden anbringen lassen.

Die aus dem Stand der Technik bekannten gebäudeintegrierten Photovoltaiksysteme sind in der Herstellung und/oder in der Anbringung noch stets relativ aufwendig. Es wäre daher wünschenswert, auf gebäudeintegrierte Photovoltaikeinrichtungen zurückgreifen zu können, die nicht mit den Nachteilen des Stands der Technik behaftet sind. Demgemäß lag der vorliegenden Erfindung die Aufgabe zu Grunde, eine gebäudeintegrierbare Photovoltaik-Baueinheit verfügbar zu machen, die eine leichte und zuverlässige Anbringung einer Gebäudefassade gestattet und die gleichzeitig gute Dauergebrauchseigenschaften und hohe Wirkungsgrade auch nach mehrjähriger Nutzung zulässt und die darüber hinaus ohne großen Aufwand ersetzt werden kann.

Demgemäß wurde eine gebäudeintegrierbare Photovoltaik-Baueinheit gefunden, umfassend, in dieser Reihenfolge,
a) ein Photovoltaikverbundlagensystem, umfassend mindestens ein Dünnschicht-Photovoltaikelement, insbesondere ein organisches Photovoltaikelement (OPV-System) oder ein anorganisches Photovoltaikelement,
b) eine erste Kopplungslage,
c) eine Anbindungs- und Kompensationsschicht mit einer ersten, der ersten Kopplungslage zugewandten Seite und einer gegenüberliegenden zweiten Seite, eingerichtet und ausgelegt, um Dehnungen oder Formveränderungen mindestens einer zur ersten Seite benachbarten Schicht und/oder um Dehnungen oder Formveränderungen einer über die zweite Seite verbundenen bzw. verbindbaren Schicht und/oder um relative Lageveränderungen von mindestens einer zur ersten Seite benachbarten Schicht und der über die zweite Seite verbundenen bzw. verbindbaren Schicht zu kompensieren.

Bevorzugt ist die Anbindungs- und Kompensationsschicht eingerichtet und ausgelegt, um Dehnungen oder Formveränderungen mindestens einer zur ersten Seite benachbarten Schicht und/oder, vorzugsweise und, um Dehnungen oder Formveränderungen einer über die zweite Seite verbundenen bzw. verbindbaren Schicht sowie um relative Lageveränderungen von mindestens einer zur ersten Seite benachbarten Schicht und der über die zweite Seite verbundenen bzw. verbindbaren Schicht zu kompensieren. Die Anbindungs- und Kompensationsschicht ist demgemäß insbesondere auch eingerichtet und ausgelegt, um die relative Lageveränderung von mindestens einer zur ersten Seite benachbarten Schicht und der über die zweite Seite verbundenen bzw. verbindbaren Schicht zu kompensieren. Mit der Anbindungs- und Kompensationsschicht c) sollen bevorzugt mechanische Spannungen in und zwischen Schichten bzw. Lagen, die benachbart zu dieser Schicht c) vorliegen, ausgeglichen werden. Auf diese Weise kann eine Beeinträchtigung des Photovoltaikverbundlagensystems, beispielsweise ein Einreißen oder Dehnen bzw. Überdehnen dieses Photovoltaikverbundlagensystems, vermieden oder jedenfalls signifikant zurückgedrängt werden.

Eine gebäudeintegrierbare Photovoltaik-Baueinheit im Sinne der vorliegenden Erfindung soll nicht nur ein Bauteil darstellen, das ein anderes Bauteil einer Gebäudehülle bzw. -fassade ersetzt, wie dieses gemäß dem deutschen Normenentwurf DIN VDE 0126-21 vorgesehen ist, sondern jegliche Photovoltaik-Baueinheiten umfassen, die an einer Fassade anbringbar oder in eine solche Fassade integrierbar sind.

Hierbei kann das Photovoltaikverbundlagensystem in einer besonders zweckmäßigen Ausgestaltung mindestens ein organisches Photovoltaikelement (OPV) oder ein anorganisches Dünnschicht-Photovoltaikelement umfassen. Erfindungsgemäß können grundsätzlich alle Photovoltaikmodule, die in einer Fassadekonstruktion mit der erfindungsgemäßen Photovoltaik-Baueinheit verbaut werden können, zum Einsatz kommen. Besonders geeignet sind neben den Dünnschichtmodulen, z.B. auf CdTe-, CIGS-, CIS- und a-Si-Basis sowie auf Basis artverwandter Technologien, auch organische Solarzellen, Farbstoffsolarzellen (DSSC) und Solarzellen auf Basis von Perowskit.

Das erfindungsgemäße Photovoltaikverbundlagensystem kann außerdem auf einem photovoltaischen Modul basieren, umfassend eine Vielzahl an Photovoltaik-Zellen, die zwischen einer im Wesentlichen lichtdurchlässigen ersten elektrischen Anschlussschicht und einer im Wesentlichen lichtdurchlässigen zweiten elektrischen Anschlussschicht angeordnet sind, wobei mindestens zwei der Vielzahl an photovoltaischen Zellen eine photosensibilisierte Nanomatrix-Schicht und ein Ladungsträgermedien umfassen. Die photosensibilisierte Nanomatrix-Schicht weist vorzugsweise Partikel mit einer durchschnittlichen Größe im Bereich von etwa 5 nm bis etwa 300 nm, vorzugsweise im Bereich von etwa 10 nm bis etwa 40 nm auf. Bei diesen Partikeln handelt es sich vorzugsweise um Titandioxid-Nanopartikel. Außerdem können diese Partikel ausgewählt werden aus der Gruppe bestehend aus Zirkoniumoxid, Zinkoxiden, Wolframoxiden, Sulfiden, Seleniden, Telluriden und einer beliebigen Kombinationen davon. Die photosensibilisierten Nanopartikel liegen in der Nanomatrix-Schicht vorzugsweise miteinander verbunden vor. Das Ladungsträgermedium umfasst in einer zweckmäßigen Ausgestaltung ein Elektrolyt- Redoxsystem, wobei bevorzugt ein Polymerelektrolyt zum Einsatz kommt. Besonders bevorzugt wird bei der hier dargestellten Ausführungsform eines photovoltaischen Moduls auf erste und zweite photovoltaische Zellen zurückgegriffen, die jeweils über die geschilderte photosensibilisierte Nanomatrix-Schicht und das Ladungsträgermedium verfügen. Diese ersten und zweiten photovoltaischen Zellen liegen vorzugsweise zwischen einer ersten flexiblen lichtdurchlässigen Substratschicht und einer zweiten flexiblen lichtdurchlässigen Substratschicht vor. Hierbei liegt auf der ersten flexiblen lichtdurchlässigen Substratschicht mindestens ein Isolator auf, der mindestens einen Abschnitt der ersten photovoltaischen Zelle von der zweiten photovoltaischen Zelle isoliert. Die zweite flexible lichtdurchlässige Substratschicht verfügt dabei vorzugsweise über erste und zweite leitfähige Elemente, die auf dieser aufliegen, wobei das erste leitfähige Element mit der ersten photovoltaischen Zelle zur Durchleitung des Stroms in einer ersten Richtung verbunden ist und wobei das zweite leitfähige Element mit der zweiten photovoltaischen Zelle verbunden ist und den Strom in eine zweite Richtung leitet, die der ersten Richtung entgegengesetzt ist. ITO stellt beispielsweise ein geeignetes Material für das erste leitfähige Element dar. Ferner kommen im Zusammenhang mit der vorangehend geschilderten Ausführungsform auch solche photovoltaischen Module in Betracht, die mindestens zwei photovoltaische Zellen umfassen, die zwischen einer im Wesentlichen lichtdurchlässigen ersten elektrischen Anschlussschicht und einer im Wesentlichen lichtdurchlässigen zweiten elektrischen Anschlussschicht vorliegen, wobei eine der mindestens zwei photovoltaischen Zellen eine wie vorangehend geschilderte photosensibilisierte Nanomatrix-Schicht aufweist, die zwischen einer ersten elektrischen Verbindungsschicht und einem Ladungsträgermedium angeordnet ist, und wobei die andere der mindestens zwei photovoltaischen Zellen eine wie vorangehend geschilderte photosensibilisierte Nanomatrix-Schicht aufweist, die zwischen der zweiten elektrischen Anschlussschicht und einem Ladungsträgermedien angeordnet ist.

Geeignete photovoltaische Module, wie vorangehend ausgeführt, finden sich auch in der US 6,706,963 beschrieben, auf deren Offenbarung hiermit vollumfänglich Bezug genommen wird.

Im Sinne dieser Erfindung soll unter einem gebäudeintegrierbaren organischen Photovoltaikelement auch ein solches verstanden werden, bei dem das Photovoltaikelement auf einer Außenlage eines Gebäudes auf- bzw. angebracht werden kann.

Die Photovoltaikverbundlagen sind in einer bevorzugten Ausgestaltung biegeflexibel, das heißt sie sind bieg- bzw. krümmbar und können demgemäß als dünne, bieg- bzw. krümmbare Flächengebilde, beispielsweise in Folienform, vorliegen. In einer zweckmäßigen Ausgestaltung können geeignete Photovoltaikverbundlagen auf einer Rolle aufgerollt vorliegen. Eine besonders zweckmäßige Ausgestaltung der erfindungsgemäßen Photovoltaik-Baueinheit sieht vor, dass die erste Kopplungslage und die Anbindungs- und Kompensationsschicht ein laminiertes Lagensystem bilden. Diese Einheiten können somit als baulicher Verbund eingesetzt werden, wodurch die Herstellung der erfindungsgemäßen Photovoltaik-Baueinheiten nochmals erleichtert wirdIn einer bevorzugten Ausgestaltung der erfindungsgemäßen Photovoltaik-Baueinheit ist vorgesehen, dass das OPV-System in Richtung von der ersten Kopplungslage zur Schutzschicht bzw. zur Einstrahlseite des Sonnenlichts umfasst: mindestens eine Substratschicht, mindestens eine Ladungsleiterlage, mindestens eine Halbleiterlage und mindestens eine Rückseitenbarrierelage. Von Vorteil bei den erfindungsgemäßen organischen Photovoltaik-Baueinheiten ist auch, dass diese in beliebiger Größe und Form vorgefertigt werden können. Dieses gestattet eine flexible Anbringung an Gebäudefassaden. Es ist sogar möglich, die erfindungsgemäßen Photovoltaik-Baueinheiten erst an der Baustelle in die geforderte Form zu bringen.

In einer bevorzugten Ausgestaltung enthält die erfindungsgemäße organische Photovoltaik-Baueinheit ferner
e) eine Rückseitenbarriere und/oder eine erste Gasbarrierelage zwischen erster Kopplungslage und der Anbindungs- und Kompensationsschicht und
f) eine zweite Kopplungslage zur Verbindung der Rückseitenbarriere mit der Anbindungs- und Kompensationsschicht.

Die Gasbarriererelage ist bevorzugt eine Sauerstoffbarrierelage, d.h. sie ist ausgelegt und eingerichtet, um den Durchtritt von gasförmigem Sauerstoff zu verhindern. In einer besonders zweckmäßigen Ausgestaltung verhindert die Gasbarrierelage den Durchtritt von Wasserdampf und von gasförmigem Wasser, bevorzugt zusätzlich zu ihrer Funktion als Sauerstoffbarrierelage. Die Gasbarrierelage ist besonders bevorzugt undurchlässig für jegliche gasförmigen Bestandteile. Die Reflektorschicht ist bevorzugt in Form einer Gasbarriererelage ausgebildet, und liegt damit in dieser Ausgestaltung vorzugsweise einstückig als Reflektor- und Gasbarriereschicht vor. Hierfür kommen zum Beispiel mit anorganischen Materialien beschichtete Kunststofffolien oder, z.B. aufkaschierte, dünne Metallfolien in Betracht. In einer besonders geeigneten Ausführungsvariante der erfindungsgemäßen Photovoltaik-Baueinheit stellt die Anbindungs- und Kompensationsschicht mindestens eine Vlies-, Gewebe- oder Gewirklage, insbesondere mindestens eine Vliesschicht und/oder mindestens eine Gittergewebeschicht, dar oder enthält diese. Darüber hinaus können als Anbindungs- und Kompensationsschicht auch Gummilagen, die mit einer Klebe- oder Laminierschicht versehen sind, zum Einsatz kommen. Besonders bevorzugt werden Vlieslagen als Anbindungs- und Kompensationsschichten eingesetzt. Darüber hinaus können in einer weiteren zweckmäßigen Ausführungsform auch Anbindungs- und Kompensationsschichten in Form von Gewebe- oder Gewirklagen eingesetzt werden. Dabei kann in einer besonders zweckmäßigen Ausgestaltung vorgesehen sein, dass die Vlieslage Naturfasern, chemische Cellulosefasern, Glasfasern und/oder Polymerfasern, insbesondere Polyesterfasern, und/oder polymerbeschichtete, insbesondere polyesterbeschichtete, Glasfasern umfasst oder hieraus besteht. Auch kann die Gewebelage ein Klettverschlussband, insbesondere ein Hakenklettverschlussband, umfassen. Die Anbindungs- und Kompensationsschicht kann nicht nur einlagig, sondern ebenfalls zwei- oder mehrlagig ausgebildet sein, beispielsweise ein Verbundsystem aus mehreren Lagen bilden, welche vorzugsweise elastisch miteinander verbunden sind.

Bei solchen mehrlagigen Systemen können die Anbindungs- und Kompensationseigenschaften auf mehrere Lagen verteilt sein. Beispielsweise kann die äußere Lage für die Anbindung an eine Träger- oder Dämmplatte oder eine anderweitige Fassadenplatte ausgelegt und eingerichtet sein, während eine weitere Lage die Kompensationseigenschaften zur Verfügung stellt. Das mehrlagige System ist derart gestaltet, dass die für die Anbindung vorgesehene Lage die Kompensationseigenschaften der weiteren Schicht(en) nicht be- oder verhindert. In einer besonders zweckmäßigen Ausgestaltung können die sich gegenüberliegenden Außenlagen einer mehrlagigen Anbindungs- und Kompensationsschicht aus einer Vlies-, Gewebe- oder Gewirklage, insbesondere Vlieslage, gebildet sein. Zwischen diesen Vlieslagen kann z.B. eine Kleberschicht oder eine elastische Lage, beispielsweise auf Gummibasis, vorliegen.

Ferner ist in einer besonders bevorzugten Ausführungsform vorgesehen, dass die erste und/oder zweite Kopplungslage eine Klebeschicht oder eine Laminierlage darstellen oder umfassen.

Bei der Schutzschicht kann es sich zum Beispiel um eine Platte aus Glas oder einem transparenten Kunststoff handeln. Als Schutzschicht kann auch eine kratzfeste Beschichtung gemäß WO 2014/116511 A1 verwendet werden. Bevorzugt ist diese kratzfeste Beschichtung hierbei gebildet aus einem härtbaren Harz, enthaltend mindestens zwei multifunktionelle (Meth)acrylate, insbesondere tetra- oder hexafunktionelle (Meth)acrylate, und eine Vielzahl an in dem Harz dispergierten anorganischen Nanopartikeln, wie Siliciumdioxid und/oder Aluminiumoxid, und verschleißfesten Mineralteilchen, wie Siliciumcarbid und/oder Aluminiumoxid und gegebenenfalls Fotoinitiatoren, wobei die verschleißfesten Mineralpartikel eine durchschnittliche Partikelgröße von großer als 3,5 µm aufweisen.

Die Schutzschicht schützt die Photovoltaikverbundlage vor mechanischer Beschädigung. Die Schutzschicht kann zum Beispiel unmittelbar an der Photovoltaikverbundlage anliegen, kann aber auch mittels einer Kleberschicht, z.B. einer 2K-Kleberschicht, mit dieser verbunden sein. Gemäß einer weiteren Ausführungsvariante ist es möglich, die Schutzschicht in Form einer Kunststoff- oder Glasplatte beabstandet von der Photovoltaikverbundlage zu positionieren, beispielsweise mittels geeigneter Befestigungs- und/ oder Trägerelemente.

Außerdem hat es sich als sehr vorteilhaft erwiesen, die Photovoltaikverbundlage vollständig bzw. vollflächig über die erste Kopplungslage mit der Anbindungs- und Kompensationslage zu verbinden. Eine vollflächige Verbindung im Sinne der vorliegenden Erfindung gelingt auch über eine sogenannte Kratzspachtelung. Über die vollflächige Anbindung wird besonders vorteilhaft eine Fixierung der Photovoltaikverbundlage, insbesondere auch des OPV-Systems, erreicht, die keine Wellenbildung zeigt bzw. nicht zur Wellenbildung neigt.

Die der Erfindung zu Grunde liegende Aufgabe wird des Weiteren gelöst durch einen Baukörper, umfassend
i) mindestens eine Fassadenplatte oder Fassadenbeschichtung,
ii) mindestens eine Haft- und Installationsschicht und
iii) mindestens eine erfindungsgemäße Photovoltaik-Baueinheit, besonders bevorzugt mindestens ein organisches Photovoltaikelement,
iv) gegebenenfalls mindestens eine transparente Schutzschicht,
wobei die Haft- und Installationsschicht die Photovoltaik-Baueinheit über deren Anbindungs- und Kompensationsschicht oder über deren laminiertes Lagensystem mit der Fassadenplatte oder Fassadenbeschichtung verbindet,
oder umfassend, in dieser Reihenfolge,
1) mindestens eine Fassadenplatte oder Fassadenbeschichtung,
2) mindestens eine Haft- und Installationsschicht und
3) mindestens ein Photovoltaikverbundlagensystem, umfassend mindestens ein Dünnschicht-Photovoltaikelement, insbesondere ein organisches Photovoltaikelement (OPV-System), oder ein anorganisches Photovoltaikelement, besonders bevorzugt mindestens ein organisches Photovoltaikelement, sowie
4) gegebenenfalls mindestens eine transparente Schutzschicht,
wobei die Haft- und Installationsschicht das Photovoltaikverbundlagensystem mit der Fassadenplatte oder Fassadenbeschichtung verbindet.

In der letztgenannten Ausführungsform eines erfindungsgemäßen Baukörpers kann vorgesehen sein, dass zwischen der Haft- und Installationsschicht und dem Photovoltaikverbundlagensystem eine Rückseitenbarrierenlage und/oder eine Gasbarrierelage, insbesondere Sauerstoffbarrierelage, vorliegt, über die die Anbindung des Photovoltaikverbundlagensystems an die Fassadenplatte vermittels der Haft- und Installationsschicht erfolgt. Hierbei können Reflektorschicht und Gasbarrierelage bzw. Sauerstoffbarrierelage auch einstückig ausgebildet sein. Alternativ kann die Gasbarrierelage, insbesondere Sauerstoffbarrierelage, in Bezug auf das Photovoltaikverbundlagensystem hinter oder vor, vorzugsweise hinter der Rückseitenbarriere vorliegen. Beispielsweise kann die Gasbarrierelage, insbesondere Sauerstoffbarrierelage, in Form einer Kunststofffolie ausgebildet sein, die insbesondere als Laminatfolie zur Befestigung an die Rückseitenbarriere oder das Photovoltaikverbundlagensystem herangezogen werden kann.

Bei den erfindungsgemäßen Baukörpern kann die Fassadenplatte eine Trägerplatte, insbesondere eine Putzträgerplatte, oder eine Dämmplatte, insbesondere eine geschäumte Dämmplatte, eine Mineralwoll-Dämmplatte, eine Dämmplatte auf Basis von Naturfasern und/oder eine Calciumsilikat-Dämmplatte, umfassen oder hieraus bestehen. In einer Ausführungsform kann die Fassadenplatte eine wärmedämmende oder wärmegedämmte Trägerplatte darstellen. Bei dieser Ausgestaltung bildet die Fassadenplatte eine kombinierte Dämm- und Trägerplatte. Bei der Fassadenbeschichtung der erfindungsgemäßen Baukörper handelt es sich regelmäßig um eine Putzbeschichtung erhalten aus einer mineralischen Beschichtungsmasse. In dieser Fassaden- bzw. Putzbeschichtung kann auch ein Armierungsgewebe vorliegen.

Als besonders interessant hat sich erwiesen, dass auch Wärmedämmverbundsysteme mit den erfindungsgemäßen Photovoltaik-Baueinheiten ausgestattet werden können. Dabei können diese Wärmedämmverbundsysteme bereits als Modul vorliegen, auf denen fassadenseitig die erfindungsgemäße Photovoltaik-Baueinheit vorliegt, oder das Wärmedämmverbundsystem wird zunächst an einer Gebäudefassade angebracht und anschließend mit der erfindungsgemäßen Photovoltaik-Baueinheit versehen mittels der Haft- und Installationsschicht. Die Haft- und Installationsschicht ist im Sinne der Erfindung eine Installationsschicht, als dass durch diese mindestens eine, insbesondere eine Vielzahl an Verbindungsleitungen zu dem Photovoltaikverbundlagensystem oder der erfindungsgemäßen Photovoltaik-Baueinheit hindurchgehen und/oder zumindest abschnittsweise verlaufen können. Die Träger- bzw. Wärmedämmplatte kann hierbei in bekannter Weise, beispielsweise mittels Klebens und/oder Dübelns, an einer Gebäudefassade befestigt werden.

Selbstverständlich ist es ebenfalls möglich, auf der Fassadenplatte, insbesondere der Trägerplatte oder der Wärmedämmplatte, einen Putz, beispielsweise einen Unterputz aufzutragen. Diese Putzschichtung kann dann vorzugsweise auch mit einem Armierungsgewebe versehen sein. Beispielsweise kann das Armierungsgewebe darin eingebettet vorliegen.

Die erfindungsgemäße Photovoltaik-Baueinheit bzw. der erfindungsgemäße Baukörper ermöglichen es, möglichst viele Komponenten wie beispielsweise elektrische Leitungen und Anschlüsse im Vorfeld mit zu verbauen. Beispielsweise können Versorgungsleitungen in entsprechend konstruierte Nuten von Fassadenbeschichtung oder Fassadenplatte, insbesondere von Trägerplatte oder Wärmedämmplatte, und/oder Haft- und Installationsschicht verlegt werden. Dadurch gelingt eine zügige und einfache Montage an der Baustelle.

Bevorzugt sind auch solche erfindungsgemäßen Baukörper, bei denen die Haft- und Installationsschicht eine mineralische Bindemittelmasse, insbesondere einen Putzmörtel, oder einen Kleber, z.B. einen 2K-Kleber, umfasst oder hieraus gebildet ist. Darüber hinaus besteht die Möglichkeit, die erfindungsgemäße Photovoltaik-Baueinheit bzw. das Photovoltaikverbundlagensystem des erfindungsgemäßen Baukörpers über die Anbindungs- und Kompensationsschicht mittels einer Haft- und Installationsschicht in Form eines sogenannten Dickanstrichs, welcher auch als Dichtanstrich fungieren kann, an einer Fassadenseite anzubringen. Die Haft- und Installationsschicht verbindet die Anbindungs- und Kompensationsschicht der erfindungsgemäßen Photovoltaik-Baueinheit mit der Fassadenbeschichtung oder der Fassadenplatte, insbesondere der Trägerplatte oder der Wärmedämmplatte, und erlaubt gleichzeitig, die Einbindung bzw. Verlegung oder Leitung von elektrischen Verbindungen und elektrischen Baukörpern, um die mit dem Photovoltaikverbundlagensystem erzeugte elektrische Energie abzuführen.

Darüber hinaus greift man vorteilhafterweise auf solche erfindungsgemäßen Baukörper und erfindungsgemäßen Photovoltaik-Baueinheiten zurück, bei denen die Anbindungs- und Kompensationsschicht der Photovoltaik-Baueinheit eine Vlieslage umfasst, insbesondere gebildet aus Glasfasern, Polymerfasern und/oder polymerbeschichteten, insbesondere polyesterbeschichteten, Glasfasern. Die Anbindungs- und Kompensationsschicht aus faserenthaltendem Material, insbesondere in Form eines Vlieses, auszuführen, hat sich als besonders vorteilhaft erwiesen. Zum einen gelingt auf diese Weise die unmittelbare Anbindung bzw. Einbettung in eine Haft- und Installationsschicht, z.B. auf Basis eines mineralischen Bindemittels, wie dieses bei der Fassadengestaltung üblicherweise zum Einsatz kommt. Durch das Einbetten wird eine Verzahnung der Faserstruktur von Vlies-, Gewebe- oder Gewirklage mit der Masse der Haft- und Installationsschicht, beispielsweise einer mineralischen Putzmasse, erreicht. Es ist folglich möglich, auf aufwendige Trägerkonstruktionen zu verzichten. Vielmehr gelingt mit den erfindungsgemäßen Photovoltaik-Baueinheiten bzw. den erfindungsgemäßen Baukörpern die unmittelbare Integration in bzw. Anbindung an übliche Fassadengestaltungen. Hierdurch wird eine sehr große gestalterische wie auch bautechnische Freiheit ermöglicht. Darüber hinaus geht mit der Verwendung der genannten Anbindungs- und Kompensationsschichten der erfindungsgemäßen Photovoltaik-Baueinheiten bzw. Baukörper der überraschende Vorteil einher, dass mechanische Spannungen, die sich, beispielsweise auf Grund unterschiedlichen thermischen Ausdehnungsverhaltens benachbarter Materialien, zwischen den mit der Anbindungs- und Kompensationsschicht verbundenen Lagen bzw. Schichten einstellen können, ausgeglichen werden. Folglich kann eine Zerstörung oder Beeinträchtigung des Photovoltaik-Elements der erfindungsgemäßen Photovoltaik-Baueinheit bzw. der erfindungsgemäßen Baukörper vermieden werden. Auch gelingt es mit der Anbindungs- und Kompensationsschicht, Dimensionsänderungen, die sich nur auf einer Seite einstellen, beispielsweise Rissbildung, auszugleichen. Somit kann eine fassadenseitig eingetretene Rissbildung, beispielsweise in einem Unterputz oder in einer Trägerplatte, durch die Anbindungs- und Kompensationsschicht aufgefangen und ausgeglichen werden, wodurch eine Beeinträchtigung der Photovoltaikverbundlage vermieden und die Lebensdauer von erfindungsgemäßer Photovoltaik-Baueinheit und erfindungsgemäßen Baukörper verlängert wird.

Grundsätzlich ist es ebenfalls möglich, die Anbindungs- und Kompensationsschicht zunächst mittels der Haft- und Installationsschicht an einer Fassade anzubringen, um anschließend die Photovoltaikverbundlage daran zu befestigen. Es hat sich als vorteilhaft erwiesen, eine vorgefertigte Einheit an der Baustelle zu verwenden, bei der die Anbindungs- und Kompensationsschicht bereits mit der Photovoltaikverbundlage verbunden vorliegt.

Es hat sich auch als vorteilhaft erwiesen, dass die erfindungsgemäße Photovoltaik-Baueinheit es gestattet, relativ unproblematisch wieder von der Fassade entfernt werden zu können, ohne die Fassade signifikant zu beschädigen. Diese vorteilhafte Eigenschaft geht auf die Anbindungs- und Kompensationsschicht zurück, die, insbesondere wenn als Vlies-, Gewebe- oder Gewirklage vorliegend, eine geringere Festigkeit aufweist als die benachbarten mineralischen Putzschichten oder anderweitige übliche Klebeschichten der Kopplungslagen und der Haft- und Installationsschicht.

Die erfindungsgemäßen Photovoltaik-Baueinheiten können sowohl unmittelbar aneinander angrenzend als auch voneinander beabstandet auf einer Fassade angebracht oder darin integriert werden.

Die mit den erfindungsgemäßen Photovoltaik-Baueinheiten an einer Fassade erhältliche Photovoltaikeinrichtung kann selbstverständlich in der Weise eingerichtet werden, dass die maximale Betriebsspannung stets kleiner als 120 Volt ist. Bei Beachtung dieses Grenzwertes brauchen keine speziellen zusätzlichen Schutzmaßnahmen bei der Anbringung auf einer Fassade bzw. bei der Integration in eine solche Fassade beachtet werden.

In einer zweckmäßigen Ausgestaltung kann beispielsweise vorgesehen sein, dass elektrische Leitungen und/ oder Anschlussdosen in die Fassadenbeschichtung oder die Fassadenplatte, insbesondere die Trägerplatte oder die Wärmedämmplatte, eingebettet bzw. in die auf der Fassadenbeschichtung oder der Fassadenplatte, insbesondere der Trägerplatte oder der Wärmedämmplatte, vorliegende Haft- und Installationsschicht und/oder Putzschichten integriert sind. Die Haft- und Installationsschicht wird in einer vorteilhaften Ausgestaltung möglichst dünn ausgeführt. In einer zweckmäßigen Ausführungsform liegt die durchschnittliche Dicke der Haft- und Installationsschicht oberhalb von 1 mm, beispielsweise im Bereich von 2 mm bis 20 mm.

Solche erfindungsgemäßen Baukörper sind besonders bevorzugt, bei denen die Anbindungs- und Kompensationsschicht im Wesentlichen vollflächig mit der Haft- und Installationsschicht verbunden, z.B. in dieser eingebettet, vorliegt. Unter Einbetten soll dabei verstanden werden, dass die Anbindungs- und Kopplungsschicht zumindest teilweise in der Haft- und Installationsschicht einliegt.

Die der Erfindung zu Grunde liegende Aufgabe wird des Weiteren gelöst durch einen Wandaufbau mit einer Fassadenseite, umfassend fassadenseitig mindestens eine erfindungsgemäße Photovoltaik-Baueinheit und/oder mindestens einen erfindungsgemäßen Baukörper.

Dabei kann zweckmäßigerweise vorgesehen sein, dass die Anbindungs- und Kompensationsschicht der mindestens einen Photovoltaik-Baueinheit vermittels einer mineralischen Putzbeschichtungsmasse mit der Fassadenseite verbunden ist.

Mit der vorliegenden Erfindung gelangt man einfach und zuverlässig zu an Gebäudefassaden anbringbaren Photovoltaik-Baueinheiten, die ohne eine aufwendige Gerüst- oder Tragestruktur oder eine sonstige aufwendige Unterkonstruktion, beispielsweise enthaltend Profilelemente, auskommt. Von Vorteil ist ebenfalls, dass die erfindungsgemäßen Photovoltaik-Baueinheiten als vorgefertigtes Modul zur Verfügung gestellt werden können und sich demgemäß einfach und unproblematisch anbringen und auch elektrisch verbinden lassen. Von Vorteil ist ebenfalls, dass die erfindungsgemäßen Photovoltaik-Baueinheiten im Wesentlichen auf alle bekannten Photovoltaikelemente zurückgreifen können. Neben polykristallinen und monokristallinen Solarelementen sind insbesondere Dünnschicht-Photovoltaikelemente geeignet. Hierbei wird besonders bevorzugt auf organische Photovoltaikelemente (OPV-Systeme) zurückgegriffen. Als besonders zweckmäßig haben sich für die erfindungsgemäßen Photovoltaik-Baueinheiten flexible Photovoltaikdünnschichtelemente erwiesen, die auf Grund ihrer Flexibilität einfach in die erfindungsgemäße Baueinheit und den erfindungsgemäßen Baukörper zu integrieren sind. Auch ist es sehr vorteilhaft, dass mit den erfindungsgemäßen Photovoltaik-Baueinheiten der Ersatz defekter Baueinheiten sehr einfach möglich ist. Dieses geht insbesondere auf die Verwendung der Anbindungs- und Kompensationsschicht zurück.

Mit den erfindungsmäßen Photovoltaik-Baueinheiten ist es, anders als bei herkömmlichen Profilkonstruktionen, bei denen stets nur eine bereichsweise Anbindung erfolgt, möglich, zu einer Konstruktion zu gelangen, bei der das Photovoltaik-Element vollflächig auf der Unterlage aufliegt bzw. mit dieser verbunden ist. Interessanterweise wirkt sich trotz einer möglichen vollflächigen Verklebung bzw. Anbindung der Photovoltaikverbundlage der Einfluss des Einsatzes von Materialien mit unterschiedlichem Temperaturdehnungsverhalten nicht nachteilig auf die Dauergebrauchseigenschaften der erfindungsgemäßen Baueinheit aus. Dieses dürfte im vorliegenden Fall auf den Einsatz der Anbindungs- und Kompensationsschicht zurückzuführen sein, welche mechanische Spannungen, die innerhalb einer Schicht und/oder zwischen benachbarten Schichten auftreten, ausgleicht.

Weitere Merkmale und Vorteile der Erfindung ergeben sich aus der nachgehenden Beschreibung, in der bevorzugte Ausführungsformen der Erfindung beispielhaft anhand einer schematischen Zeichnung erläutert sind. Dabei zeigt:
Fig. 1 eine ausschnittsweise und teilweise im Aufriss dargestellte Ansicht einer Gebäudefassade,
Fig. 2 eine Schnittansicht durch die Darstellung gemäß Fig. 1 entlang der Linie A-A,
Fig. 3 eine schematisierte Schnittdarstellung eines Photovoltaik-Bauelements mit einem auf einer Haft- und Installationsschicht befestigten Photovoltaik-Element sowie

In den Figuren sind gleich wirkende Teile mit gleichen Bezugszeichen versehen.

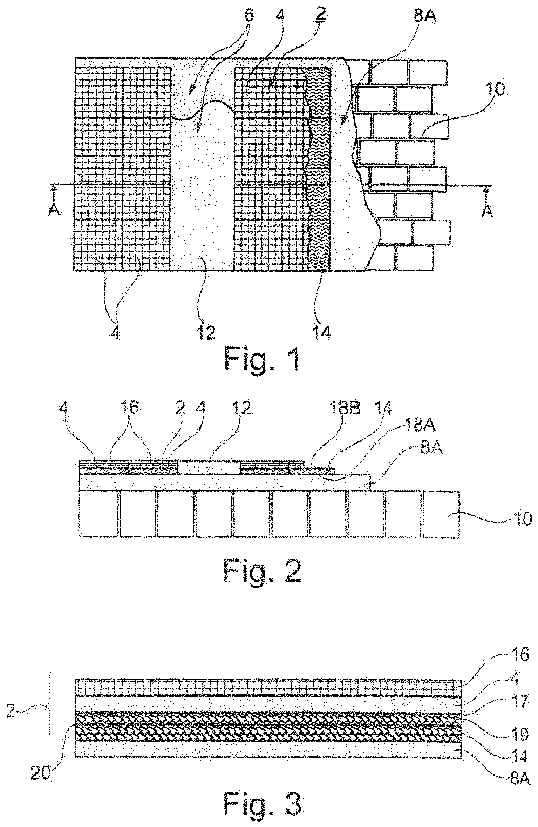

In Fig. 1 ist ausschnittsweise eine Fassade eines Gebäudes mit einer erfindungsgemäßen gebäudeintegrierten Photovoltaik-Baueinheit 2 dargestellt. Die Photovoltaik-Baueinheit 2 umfasst hierbei eine Mehrzahl einzelner Photovoltaik-Elemente 4 und stellt regelmäßig ein Photovoltaikverbundlagensystem dar. Üblicherweise sind mehrere derartige Photovoltaik-Elemente 4 vorzugsweise unmittelbar aneinander angrenzend angeordnet und in hier nicht näher dargestellter Weise elektrisch miteinander verschaltet. Bei der Photovoltaik-Baueinheit 2 handelt es sich in der dargestellten Ausführungsform um ein flexibles, folienartiges System enthaltend Photovoltaik-Elemente 4, insbesondere in Form von OPV-Einheiten. Derartige folienartige Photovoltaik-Baueinheiten 2 weisen eine sehr hohe Flexibilität auf. Hierbei zeichnen sich insbesondere OPV-Elemente durch eine extrem dünne Bauform aus. Die durchschnittliche Dicke liegt regelmäßig im Bereich von 0,1 mm bis 5 mm.

Die Photovoltaik-Baueinheiten 2 weisen eine Vielzahl von einzelnen Photovoltaik-Zellen auf. Diese sind innerhalb des Photovoltaik-Elements 4 durch elektrische Leiterbahnen geeignet verschaltet. Jedem einzelnen Photovoltaik-Element 4 ist weiterhin eine Verbindungsleitung zugeordnet, wobei mehrere Photovoltaik-Elemente 4 in geeigneter Weise miteinander über die Verbindungsleitungen miteinander verbunden sind. Diese Verbindungsleitungen treten nach erfolgter Installation in hier nicht näher dargestellter Weise in Kontakt mit z. B. Energiespeichern und/oder Wechselrichtern. Diese sind typischerweise im Innern des Gebäudes angeordnet, können aber auch integriert in der Fassade vorliegen.

Geeigneter Weise sind die einzelnen Photovoltaik-Baueinheiten 2 vollflächig in eine Außenhaut 6 der Fassade, z.B. in eine Putzbeschichtung, z.B. die Fassadenbeschichtung, oder eine Fassadenplatte, insbesondere eine Trägerplatte oder eine Wärmedämmplatte, integriert. Auch können sie auf einer solchen Außenhaut aufliegen. Hierbei kann vollständig auf zusätzliche, auf die Außenhaut 6 angebrachte Tragstrukturen verzichtet werden, wie beispielsweise Profile oder sonstige Befestigungselemente. Vielmehr sind die einzelnen Photovoltaik-Baueinheiten 2 über die Anbindungs- und Kompensationsschicht unmittelbar mit der Außenhaut 6 verbunden. Die Photovoltaik-Baueinheiten 2 liegen in der dargestellten Ausführungsform mit ihrer gesamten Fläche an einer Haft- und Installationsschicht in Form eines Unterputzes 8A, 8B der Außenhaut 6 an.

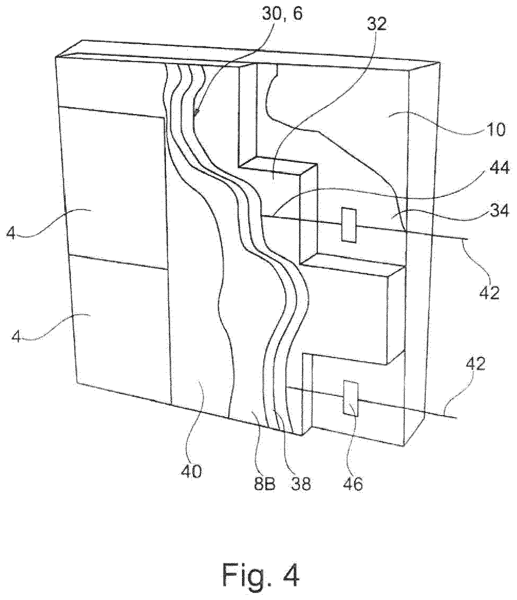

Die Außenhaut 6 ist in den Ausführungsbeispielen der Figuren 1 und 4 auf einer Außenwand 10, beispielsweise einer Ziegelmauerwand, aufgebracht. Bei der Außenhaut 6 handelt es sich in dem Ausführungsbeispiel um einen an der Außenwand 10 aufgebrachten Unterputz 8A, der hier die Haft- und Installationsschicht bildet. Hieran sind die Photovoltaik-Baueinheiten 2 vollflächig angebracht. Weiterhin umfasst in der dargestellten Ausführungsform die Außenhaut 6 bereichsweise auch noch einen Oberputz 12, welcher auf den Unterputz 8A in freien Bereichen aufgebracht ist, welche nicht von den Photovoltaik-Baueinheiten 2 überdeckt sind.

Im Ausführungsbeispiel der Fig. 1 sind die einzelnen Photovoltaik-Baueinheiten 2 in Gruppen angeordnet, die zueinander beabstandet sind. Im Zwischenbereich zwischen den beiden Gruppen ist der Oberputz 12 aufgebracht.

Zum Befestigen der Photovoltaik-Baueinheit 2 kann die Anbindungs- und Kompensationsschicht 14 vorzugsweise in einen noch feuchten Unterputz 8A angedrückt werden, so dass dieser Unterputz 8A als Haft- und Installationsschicht beim Trocknen und Aushärten eine feste Verbindung mit der Anbindungs- und Kompensationsschicht 14 eingeht.

Wie insbesondere aus der Figur 2 zu entnehmen ist, ist in dem abgebildeten Ausführungsbeispiel einer jeweiligen Photovoltaik-Baueinheit 2 noch eine vorderseitig angeordnete transparente Schutzschicht 16 in Form einer Platte zugeordnet. Diese Schutzschicht versiegelt die Photovoltaik-Baueinheit 2 zur Umgebung hin. Bei dieser Platte 16 handelt es sich beispielsweise um eine Glas- oder Kunststoffplatte mit hoher Eigensteifigkeit. Diese ist beispielsweise auf die eigentlich folienartige Photovoltaik- Baueinheit 2 aufgebracht, insbesondere aufgeklebt. Dadurch weist in einer Ausführungsvariante die derart vorbereitete Photovoltaik-Baueinheit 2 mit der Platte 16 eine Eigensteifigkeit auf.

Fig. 3 zeigt den Aufbau einer erfindungsgemäßen Ausführungsform einer Photovoltaik- Baueinheit 2. An die Anbindungs- und Kompensationsschicht 14 in Form einer Vliesschicht schließt sich die zweite Kopplungslage 20 in Form einer Klebeschicht an. Diese verbindet die Anbindungs- und Kompensationsschicht 14 mit einem Verbundsystem aus Reflektorschicht und erster Gasbarrierelage 19, insbesondere Sauerstoffbarrierelage. Über die erste Kopplungslage 17 findet dann die Anbindung an das Photovoltaikverbundlagensystem, auch Photovoltaik-Element 4 genannt, statt. Dieses Photovoltaikverbundlagensystem umfasst in der dargestellten Ausführungsform als OPV-System eine Substratschicht, eine Ladungsleiterlage, eine Halbleiterlage und eine Gasbarrierelage (nicht abgebildet). An das Photovoltaikverbundlagensystem 4 schließt sich die Schutzschicht 16 in Form einer steifen transparenten Platte an. Die Anbindungs- und Kompensationsschicht 14 gleicht das unterschiedliche thermische Ausdehnungsverhalten von benachbarten Schichten wie Unterputz einerseits und Photovoltaik-Baueinheit 2, Reflektorschicht und/oder Gasbarrierelage andererseits aus. Temperaturinduzierte Scher- oder Schubspannungen werden aufgrund der Anbindungs- und Kompensationsschicht 14 entweder gar nicht oder deutlich abgemildert zwischen Unterputz und dem Photovoltaik-Element 4 übertragen. Diese Anbindungs- und Kompensationsschicht 14 ist, wie in Fig. 3 angedeutet, mit der in Form eines Unterputzes 8A vorliegenden Haft- und Installationsschicht verbunden bzw. in diese eingebettet. Der Unterputz fungiert hier somit als Haft- und Installationsschicht.

Auf der Anbindungs- und Kompensationsschicht 14 ist das Photovoltaik-Element 4 bei der Ausführungsvariante der Figur 3 unter Vermittlung einer Klebschicht 20 als erster Kopplungslage unter Einbindung von Gasbarriere- und Reflektorlage vollflächig aufgebracht. Die Klebschicht kann hierbei ebenfalls durch punktuelle Klebestellen ausgebildet sein.

Der in der Figur 3 dargestellte Aufbau einer erfindungsgemäßen Photovoltaik-Baueinheit 2 ist vorzugsweise als ein vorgefertigtes Modul und damit als eine vorgefertigte Photovoltaik-Baueinheit 2 ausgebildet. Diese kann als solche an die Baustelle angeliefert und dort bereitgestellt werden. Die Baueinheit 2 braucht lediglich noch als solche an der Außenhaut 6 befestigt zu werden, insbesondere durch Anpressen gegen den feuchten Unterputz 9 als Haft- und Installationsschicht.

Das Photovoltaik-Element 4 und die Anbindungs- und Kompensationsschicht 14 weisen in bevorzugter Ausgestaltung eine gleiche Grundfläche auf, überdecken daher einander. Bei der Verwendung und Anordnung der Schutzschicht 16 bei einer vorgefertigten Baueinheit 2 gilt dies ergänzend auch für diese Schutzschicht 16. In einer alternativen Ausführungsvariante, bei der die Anbindungs- und Kompensationsschicht 14 bauseitig zunächst angebracht wird, bevor die Photovoltaik-Elemente 4 aufgebracht werden, kann die Anbindungs- und Kompensationsschicht 14 auch eine zu den Photovoltaik-Elementen verschiedene Grundfläche haben.

Die Verbindung der Photovoltaik-Elemente 4 bzw. gegebenenfalls der Gasbarriere- und Rückseitenbarriere zur Anbindungs- und Kompensationsschicht 14 und/ oder auch die Verbindung der Anbindungs- und Kompensationsschicht 14 zum Unterputz 8A, d.h. zur Haft- und Installationsschicht ist jeweils lösbar, so dass also entweder die Photovoltaik-Elemente 4 als solche oder gemeinsam mit der Anbindungs- und Kompensationsschicht 14 oder mit Teilen von dieser ohne signifikante Zerstörung der darunterliegenden Ebene entfernt und durch neue Photovoltaik-Elemente 4 ersetzt werden können.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung vorteilhaft sein.

## Patentansprüche

1. Gebäudeintegrierbare Photovoltaik-Baueinheit, umfassend, in dieser Reihenfolge,
a) ein Photovoltaikverbundlagensystem, umfassend mindestens ein Dünnschicht-Photovoltaikelement, insbesondere ein organisches Photovoltaikelement (OPV-System) oder ein anorganisches Photovoltaikelement,
b) eine erste Kopplungslage,
c) eine Anbindungs- und Kompensationsschicht mit einer ersten, der ersten Kopplungslage zugewandten Seite und einer gegenüberliegenden zweiten Seite, eingerichtet und ausgelegt, um Dehnungen oder Formveränderungen mindestens einer zur ersten Seite benachbarten Schicht und/oder um Dehnungen oder Formveränderungen einer über die zweite Seite verbundenen bzw. verbindbaren Schicht und/oder um relative Lageveränderungen von mindestens einer zur ersten Seite benachbarten Schicht und der über die zweite Seite verbundenen bzw. verbindbaren Schicht zu kompensieren.

2. Baueinheit nach Anspruch 1, **dadurch gekennzeichnet, dass** die erste Kopplungslage und die Anbindungs- und Kompensationsschicht ein laminiertes Lagensystem bilden.

3. Baueinheit nach Anspruch 1 oder 2, **dadurch gekennzeichnet, dass** das Photovoltaikverbundlagensystem ferner eine Rückseitenbarrierelage, insbesondere Gasbarrierelage, umfasst und/oder dass das Photovoltaikverbundlagensystem ferner mindestens eine Reflektorlage umfasst, vorzugsweise auf derjenigen Seite der Rückseitenbarrierelage vorliegend, die der Anbindungs- und Kompensationsschicht gegenüberliegt, wobei die Reflektorlage und die Rückseitenbarrierelage, insbesondere Gasbarrierelage, vorzugsweise einstückig oder als Rückseitenlaminat ausgebildet sind, und/oder dass
das Photovoltaikverbundlagensystem, insbesondere das OPV-System, in Richtung von der ersten Kopplungslage zur Einstrahlseite des Sonnenlichts eine Substratlage und eine Ladungsleiterlage umfasst.

4. Baueinheit nach einem der vorangehenden Ansprüche, **dadurch gekennzeichnet, dass**
die Anbindungs- und Kompensationsschicht mindestens eine Vlies-, Gewebe- oder Gewirklage, insbesondere mindestens eine Vlieslage und/oder mindestens eine Gittergewebeschicht, umfasst oder hieraus besteht.

5. Baueinheit nach einem der vorangehenden Ansprüche, **dadurch gekennzeichnet, dass**
die Vlies-, Gewebe- oder Gewirklage, insbesondere die Vlieslage, Naturfasern, chemische Cellulosefasern, Glasfasern und/oder Polymerfasern, insbesondere Polyesterfasern, und/oder polymerbeschichtete, insbesondere polyesterbeschichtete, Glasfasern, umfasst oder hieraus besteht oder dass die Gewebelage einen Klettverschlussband umfasst.

6. Baueinheit nach einem der vorangehenden Ansprüche, ferner umfassend d) mindestens eine transparente Schutzschicht auf dem Photovoltaikverbundlagensystem.

7. Baueinheit nach einem der vorangehenden Ansprüche, **dadurch gekennzeichnet, dass**
das Photovoltaikverbundlagensystem vollflächig mit der Anbindungs- und Kompensationsschicht verbunden ist.

8. Baukörper, umfassend, in dieser Reihenfolge,
i) mindestens eine Fassadenplatte oder Fassadenbeschichtung,
ii) mindestens eine Haft- und Installationsschicht und
iii) mindestens eine Photovoltaik-Baueinheit nach einem der vorangehenden Ansprüche,
iv) gegebenenfalls mindestens eine transparente Schutzschicht,
wobei die Haft- und Installationsschicht die Photovoltaik-Baueinheit über deren Anbindungs- und Kompensationsschicht oder über deren laminiertes Lagensystem mit der Fassadenplatte oder Fassadenbeschichtung verbindet;
oder umfassend, in dieser Reihenfolge,
1) mindestens eine Fassadenplatte oder Fassadenbeschichtung,
2) mindestens eine Haft- und Installationsschicht und
3) mindestens ein Photovoltaikverbundlagensystem, umfassend mindestens ein Dünnschicht-Photovoltaikelement, insbesondere ein organisches Photovoltaikelement (OPV-System) oder ein anorganisches Photovoltaikelement, sowie
4) gegebenenfalls mindestens eine transparente Schutzschicht,
wobei die Haft- und Installationsschicht das Photovoltaikverbundlagensystem mit der Fassadenplatte oder Fassadenbeschichtung verbindet.

9. Baukörper nach Anspruch 8, **dadurch gekennzeichnet, dass** die Fassadenplatte eine Trägerplatte, insbesondere Putzträgerplatte, und/oder eine Dämmplatte, insbesondere eine geschäumte Dämmplatte, eine Mineralwoll-Dämmplatte, eine Dämmplatte auf Basis von Naturfasern und/oder eine Calciumsilikat-Dämmplatte, umfasst oder darstellt und/oder dass die Fassadenbeschichtung eine Putzbeschichtung umfasst oder darstellt.

10. Baukörper nach Anspruch 8 oder 9, **dadurch gekennzeichnet, dass** die Haft- und Installationsschicht eine mineralische Bindemittelmasse, insbesondere einen Putzmörtel, oder einen Kleber umfasst oder hieraus besteht.

11. Baukörper nach einem der Ansprüche 8 bis 10, **dadurch gekennzeichnet, dass** die Anbindungs- und Kompensationsschicht oder das laminierte Lagensystem der Photovoltaik-Baueinheit mindestens eine Vlieslage umfasst, insbesondere gebildet aus Naturfasern, chemischen Cellulosefasern, Glasfasern und/oder Polymerfasern, insbesondere Polyesterfasern, und/oder polymerbeschichteten, insbesondere polyesterbeschichteten, Glasfasern.

12. Baukörper nach einem der Ansprüche 8 bis 11, **dadurch gekennzeichnet, dass** die Fassadenplatte, insbesondere die Dämmplatte, eine ausgehärtete Putzschicht, vorzugsweise enthaltend ein Armierungsgewebe, für die Aufbringung der Haft- und Installationsschicht umfasst.

13. Baukörper nach einem der Ansprüche 8 bis 12, **dadurch gekennzeichnet, dass** die Anbindungs- und Kompensationsschicht oder das laminierte Lagensystem oder das Photovoltaikverbundlagensystem, insbesondere im Wesentlichen vollflächig, mit der Haft- und Installationsschicht verbunden, insbesondere in diese eingebettet, vorliegt.

14. Baukörper nach einem der Ansprüche 8 bis 13, **dadurch gekennzeichnet, dass** die Rückseitenbarrierelage, insbesondere Gasbarrierelage, und/oder die Reflektorschicht und/oder die Substratschicht, insbesondere die Substratschicht, unempfindlicher gegenüber, insbesondere thermisch induzierten, mechanischen Beanspruchungen, insbesondere Scher- und/oder Schubspannungen, ist als die Fassadenplatte oder die Fassadenbeschichtung oder die Haft- und Installationsschicht, oder als mindestens eine der übrigen Komponenten der Photovoltaik-Baueinheit oder dss Photovoltaikverbundlagensystems.

15. Wandaufbau mit einer Fassadenseite, umfassend fassadenseitig mindestens eine Photovoltaik-Baueinheit nach einem der Ansprüche 1 bis 7 und/oder mindestens einen Baukörper nach einem der Ansprüche 8 bis 14.

16. Wandaufbau nach Anspruch 15, **dadurch gekennzeichnet, dass** die Anbindungs- und Kompensationsschicht der mindestens einen Photovoltaik-Baueinheit vermittels einer mineralischen Putzbeschichtungsmasse als Haft- und Installationsschicht mit der Fassadenseite verbunden ist.

17. Verwendung der Photovoltaik-Baueinheit nach einem der Ansprüche 1 bis 7 oder des Baukörpers nach einem der Ansprüche 8 bis 14 für die Verkleidung von Gebäudefassaden, insbesondere in Kombination mit Wärmedämmverbundsystemen.
